# EUROPÄISCHE PATENTSCHRIFT

(11) **EP 0 527 289 B1**
(45) Veröffentlichungstag und Bekanntmachung des Hinweises auf die Patenterteilung: **06.03.1996**
(21) Anmeldenummer: 92104871.6
(22) Anmeldetag: 20.03.1992
(51) Int. Cl.: H04N 11/00, H04N 7/00, H04B 14/04

(54) **Verfahren zum Übertragen von digitalen HDTV-Signalen**
Method for transmission of digital HDTV signals
Procédé pour la transmission de signaux TVHD numériques

(30) Priorität: 02.08.1991 DE 4125606
(43) Veröffentlichungstag der Anmeldung: 17.02.1993
(73) Patentinhaber: Rohde & Schwarz GmbH & Co. KG, D-81671 München (DE)
(72) Erfinder: Dambacher, Paul, Dipl.-Ing. FH, W-8261 Ampfing (DE)
(74) Vertreter: Graf, Walter, Dipl.-Ing.

(56) Entgegenhaltungen:
- EP-A- 0 306 071
- RUNDFUNKTECHNISCHE MIT- TEILUNGEN 5/90, September/ Oktober 1990, Hamburg, C. DOSCH "HDTV-Rundfunk- satellitenUbertragung im 20-GHZ-Bereich", Seiten 221-232
- NEUES VON ROHDE & SCHWARZ, Nr. 114, Sommer 1986, P. DAMBACHER, E. KRAHMER "Audio-Coder DCA fUr den digitalen Hörfunk", Seiten 13-16
- ITU COM-89, Oktober 1989, Genf, Y. DEHERY "A digital Audio Broadcasting System for Mobile Reception"

## Beschreibung

Die Erfindung betrifft ein Verfahren zum Übertragen von digitalen HDTV-Signalen über Breitbandübertragungsstrecken.

Neben den üblichen analogen Übertragungsverfahren für Fernsehsignale nach PAL PLUS, D2MAC, MAC mit 16:9 Bildformat, HDMAC und HDTV 50/60 Hz gibt es bereits eine Reihe von digitalen Übertragungsverfahren. Diese digitalen Übertragungsverfahren haben den Vorteil, daß sie mit geringerer Bandbreite auskommen und ein geringeres C/N-Verhältnis benötigen. Nachteilig bei den digitalen Videosignalen ist ihre hohe Bit-Rate. Selbst die Codierungsnorm für die Digitalisierung von Videosignalen mit Bezug auf PAL-Qualität (4:2:2 Studiostandard nach CCR Recommendation 601; H. Hofmann, IRT, "Verteilung digitaler Bildsignale im Fernsehstudio", Fernseh- und Kinotechnik Nr. 11/84) führt noch zu digitalen Fernsehsignalen mit einer Bit-Rate von 216 Mbit/s, für Fernsehsignale von hoher Qualität, sogenannte HDTV-Signale (High Definition TeleVision) wie HDMAC bzw. HDTV ergeben sich noch weit höhere Bit-Raten bis in die Größenordnung von 1 Gbit/s.

Es gibt daher schon die verschiedenartigsten Vorschläge zur Datenreduktion solcher digitaler Fernsehsignale, die alle auf der Grundlage einer Basisbandcodierung mit Datenreduktion unter Ausnutzung der psychooptischen Phänomene des menschlichen Auges arbeiten, ähnlich wie beim Hörfunk das die psychoakustischen Phänomene des menschlichen Ohres ausnützenden MUSICAM-Datenreduktionsverfahren. Nach diesem Verfahren ist es möglich, selbst für digitale Fernsehsignale mit HD-Qualität, also für Fernsehsignale mit einem Bildformat von 16:9 und hochauflösenden Zeilenstrukturen mit einer Zeilenzahl von etwa 1000 oder mehr (digitale HDTV-Signale) die Datenrate auf unter 20 Mbit/s zu reduzieren. Nach dem sogenannten DigiCipher-Verfahren (Jerrold A. Heller & Woo H. Paik, General Instrument Corporation, USA, "The DigiCipher HDTV Broadcast System", Montreux Record 1991; Dr. Matthew Miller, Jerrold Communications, USA, "Digital HDTV on Cable", Montreux Record 1991) ist beispielsweise für Basisband- und Kanalcodierung eine Datenreduktion auf insgesamt 19,43 Mbit/s möglich, nach dem DSC-HDTV-Verfahren (Wayne C. Luplow and Pieter Fockens, Zenith Electronics Corporation, USA, "The AllDigital Spectrum-Compatible HDTV System", Montreux Record 1991) ist eine Datenrate von 21,5 Mbit/s erreichbar, nach Dig. TV für SNG (M. Cominetti, S. Chucchi, A. Morello, B. Sacco, RAI, Telettra S.p.A. Italien, "An Experimental Digital TV System for Satellite News Gathering (SNG), Montreux Record 1991) ist eine Datenreduktionsrate in ähnlichem Maße erreichbar.

Es ist Aufgabe der Erfindung, ein einfaches Verfahren aufzuzeigen, nach welchem solche auf eine Datenrate von kleiner oder gleich 20 Mbit/s datenreduzierte HDTV-Signale auf ökonomischem Wege über Breitbandübertragungsstrecken übertragen werden können.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Das erfindungsgemäße Verfahren nutzt für die Übertragung das zur Versorgung von Rundfunkempfängern über Satelliten bekannte sogenannte DSR-Verfahren (Digital Satellit Radio, Institut für Rundfunktechnik (IRT), "DSR Spezifikation des Hörfunk-Übertragungsverfahrens im TV-Sat; "Neues von Rohde & Schwarz" Nr. 114, "Audio-Coder DCA für den digitalen Hörfunk"; "Neues von Rohde & Schwarz" Nr. 122, "Audio-Decoder DDA für digitale Tonübertragung"). Für dieses DSR-Verfahren ist die Technik inzwischen sehr ausgereift und dieses DSR-Übertragungsverfahren hat sich im Hörfunk seit langem bestens bewährt. Auch die für dieses Verfahren erforderlichen Geräte sind zwischenzeitlich handelsüblich und zwar sowohl auf der Senderseite als auch auf der Empfängerseite. Das erfindungsgemäße Übertragungsverfahren für datenreduzierte HDTV-Signale kann daher auf sehr ökonomische Weise mit bereits vorhandenen Geräten realisiert werden.

Beim bisher gebräuchlichen DSR-Rundfunk-Übertragungsverfahren werden bis zu 16 Stereosignale über einen Kanal übertragen, die Basisbandcodierung erfolgt dabei nach dem DS1-Verfahren (Digital Sound 1Mbit/s; Europäische Patentanmeldung 0 133 697 bzw. "Neues von Rohde & Schwarz" Heft 114, Sommer 1986, Seiten 13 bis 16), 16 solche DS1-codierte Tonsignale werden einem DSR-Modulator, beispielsweise einem Gerät SFP der Firma Rohde & Schwarz, zugeführt. In der digitalen Ebene dieses DSR-Modulators wird ein Signalmultiplex durchgeführt und zwar auf zwei Datenströme mit je 10,24 Mbit/s. Diese sogenannte I/Q-Schnittstelle des DSR-Modulators führt entsprechend der DSR-Norm die Hauptrahmen A und B mit jeweils 320 Bit/32 kHz, wobei pro Hauptrahmen 11 Bit/32 kHz Synchronworte, 1 Bit/32 kHz für Sonderdienst, die Nutzbits in verkämmter Form sowie 19 Prüfbits/32 kHz zur Korrektur von zwei Bitfehlern pro BCH-Block (63 Bit) enthalten sind.

Diese I/Q-Schnittstelle des DSR-Modulators (siehe Datenblatt des Geräts SFP der Firma Rohde & Schwarz) wird für das erfindungsgemäße Verfahren ausgenutzt. Diese Schnittstelle von 2 x 10,24 Mbit/s führt zu dem im DSR-Modulator eingebauten 4PSK-Modulator, der das eigentliche Satelliten-ZF-Signal bei 70 oder 118 MHz liefert (siehe Beschreibung Gerät SFP der Firma Rohde & Schwarz). Diese I/Q-Schnittstelle ist beim DSR-Modulator SFP der Firma Rohde & Schwarz über die Steckbrücken A und B von außen zugänglich. Das so erzeugte DSR-Signal vom Ausgang des 4PSK-Modulators kann dann entweder über eine Satellitenstrecke, ein Koaxial- oder Gasfaserkabel, ein bekanntes Breitbandkabel-Verteilernetz (z.B. beschrieben in PTTCH, Gemeinschaftsantennen-Zubringernetz, GAZ, Digitaler Hörfunk: Verteilung von DSR-Signalen über Breitbandverteilnetze), eine Richtfunkstrecke oder eine andere bekannte Breitbandübertragungsstrecke zu dem DSR-Empfänger übertragen werden, in welchem die HDTV-Signale wieder in einem 4PSK-Demodulator rückgewonnen werden und an dessen I/Q-Schnittstelle als Ausgangssignale zur weiteren Verarbeitung zur Verfügung stehen. Mit dem DSR-Übertragungsverfahren und den hierfür bereits handelsüblichen Geräten können daher auch datenreduzierte HDTV-Signale auf sehr ökonomische Weise übertragen werden, es ist lediglich erforderlich, das zur Übertragung angebotene HDTV-Signal auf eine Bitrate von ≦ 20,48 Mbit/s zu reduzieren, wofür es die eingangs erwähnten bekannten Verfahren gibt. Es ist dann nur noch nötig, diesen Datenstrom in zwei ≦ 10,24 Mbit/s-Datenströme aufzuteilen und der I/Q-Schnittstelle des DSR-Modulators auf der Senderseite der Übertragungsstrecke zuzuführen und an der entsprechenden I/Q-Schnittstelle zwischen 4PSK-Demodulator und DSR-Decoder im Empfänger auf der anderen Seite der Übertragungsstrecke diese Datenströme wieder abzugreifen und weiter zu verarbeiten.

Empfängerseitig gibt es zwischenzeitlich sowohl DSR-Consumer-Empfänger als auch professionelle Geräte, die alle für den erfindungsgemäßen Zweck auf der Empfängerseite geeignet sind (Digitalton-Umsetzer DSRU plus Digitalton-Empfänger DSRE der Firma Rohde & Schwarz bzw. Consumer-Empfänger DSR 100 der Firma Grundig, FT 990 der Firma Philips, ST900 AF der Firma Telefunken bzw. durchstimmbare Empfänger der Firma Sony). Diese Empfänger verwenden handelsübliche LSI-Chips zur 4PSK-Demodulation und DSR-Decodierung. Die Schnittstelle zwischen 4PSK-Deund DSR-Decodierung. Die zwischen 4PSK-De-modulator und DSR-Decoder ist hierbei wieder die 2 x 10,24 Mbit/s-Schnittstelle, zusätzlich verfügbar ist noch ein entsprechendes Takt- und Synchronisationssignal. Dieses DSR-Übertragungssystem ist also transparent, d.h. die dem 4PSK-Modulator zugeführte Eingangsbitfolge entspricht der am 4PSK-Demodulator ausgelesene Ausgangsbitfolge, die Rahmenstruktur kann frei gewählt werden, beispielsweise in Anlehnung an den DSR-Rahmen.

Nach dem erfindungsgemäßen Verfahren ist beispielsweise ein unmittelbarer Satelliten-Direktempfang von digitalen HDTV-Signalen mittels eines handelsüblichen Consumer-Satelliten-Empfängers mit bis zu 30 cm Parabolspiegel möglich. Der Empfang kann stationär oder über ein portables Empfangsgerät mit justierbarer Satelliten-Antenne erfolgen. Die Bit-Fehlerrate über DSR ist typischerweise 1 x 10⁻⁴ bis 1 x 10⁻⁵. Auch eine Einspeisung in ein Breitbandverteilernetz ist möglich, das digitale HDTV-Signal kann beispielsweise in zwei Kabelkanälen übertragen werden, beispielsweise in den Kanälen S9 und S10 (160 bis 174 MHz) oder in den Kanälen S 19 und S 20 (186 bis 300 MHz) des bekannten CATV-Netzes. Mit handelsüblichen durchstimmbaren DSR-Consumer-Empfängern können diese Signale dann empfangen werden. Das erfindungsgemäße Verfahren eignet sich auch zum Zuführen der Fernsehsignale zu einem terrestrischen digitalen Fernsehsendernetz, entsprechend dem geplanten DAB-Netz für Hörfunk (Digital-Audio-Broadcasting, "Digital Audio Broadcasting" ITU COM-89 Genf, Oktober 1989). Es ist dazu nur erforderlich, das COFDM-Prinzip (Coded Orthogonal Frequency Division and Multiplexing) dieses DAB-Systems auf die Verhältnisse des Fernsehsignals zu adaptieren, damit kann dann auch die Verteilung der digitalen HDTV-Signale zu den einzelnen Sendestationen dieses terrestrischen Fernsehsendernetzes auf einfache und ökonomische Weise durchgeführt werden. Der digitale HDTV-Kanal, der neben dem Bildsignal natürlich auch mehrere Tonkanäle, beispielsweise auf der Basis des MUSICAM-Verfahrens, sowie programmbegleitende Zusatzinformationen oder Test- und Kontrolldaten enthält, kann auch einen Schlüssel enthalten, der empfängerseitig einen Descrambler aktiviert, so daß das erfindungsgemäße Verfahren auch für gebührenpflichtiges Fernsehen (PayTV)eingesetzt werden kann. Der HDTV-Empfänger kann auch in einer Multimedia-Umgebung liegen, wie sie in Elektronik 3/1991, S. 3 beschrieben ist.

Auch ein alternativer Betrieb von eingeführtem DSR zur Übertragung von digitalen Tonsignalen mit dem Verfahren gemäß der Erfindung zur Übertragung von digitalen HDTV-Signalen ist möglich. Durch Ausnutzung von zwei DSR-Kanälen können auch beispielsweise die HDTV-Fernsehsignale für dreidimensionales Fernsehen in aufwärtskompatibler Form übertragen werden.

Das erfindungsgemäße Verfahren unter Ausnutzung des bekannten DSR-Übertragungssystems kann nicht nur zur Übertragung von digitalen HDTV-Signalen ausgenutzt werden, sondern könnte auch zur Übertragung von Fernsehsignalen benutzt werden, die nach dem sogenannten VADIS-Verfahren (IRT-Kolloquium 04.02.91, Hr. Hoffmann Seite 4, "Beispiele von Projekten zur Entwicklung digitaler Fensehsysteme" - Eureka Projekt VADIS - DigiCipher; Report of the third EBU/ETSI Joint Technical Committe (JTC) Meeting in Geneva on 11-12 February 1991, Pkt.5.7.VADIS) in MAC-Qualität jedoch mit dem Format 16:9 erzeugt sind. Auf diese Weise können beispielsweise zwei nach dem VADIS-Verfahren auf 10 Mbit/s datenreduzierte digitale Fernsehsignale über eine DSR-Übertragungsstrecke übertragen werden, so daß auch für diese qualitätsmäßig mit MAC/16:9 vergleichbaren digitalen Fernsehsignale die DSR-Übertragungstechnik ökonomisch von Vorteil ist.

Die Erfindung wird im folgenden anhand schematischer Zeichnungen an einem Ausführungsbeispiel näher erläutert.

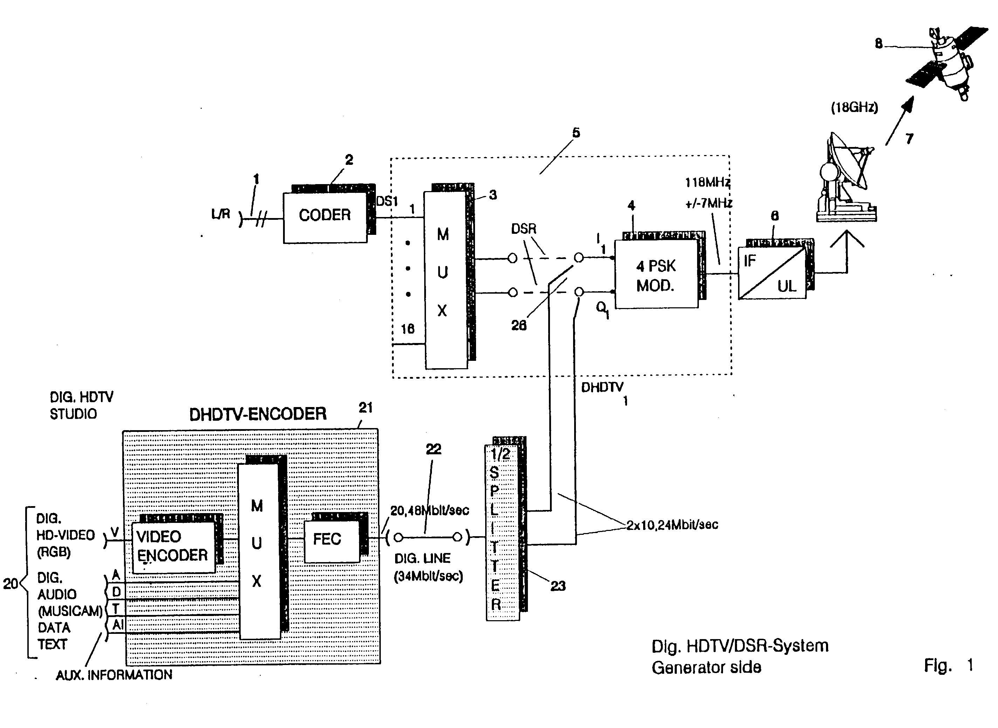

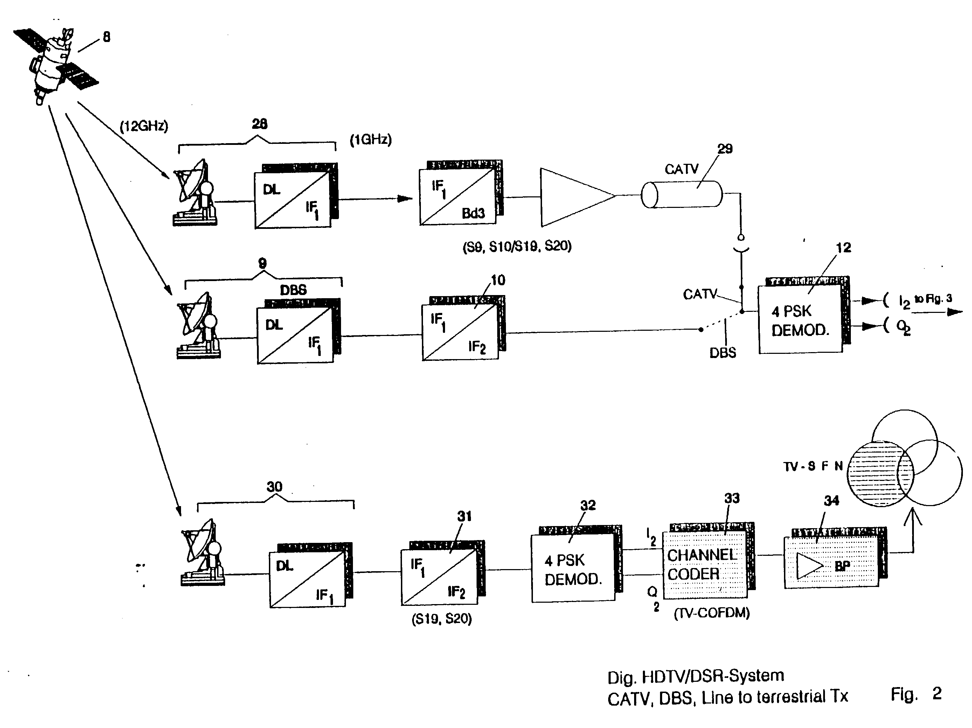

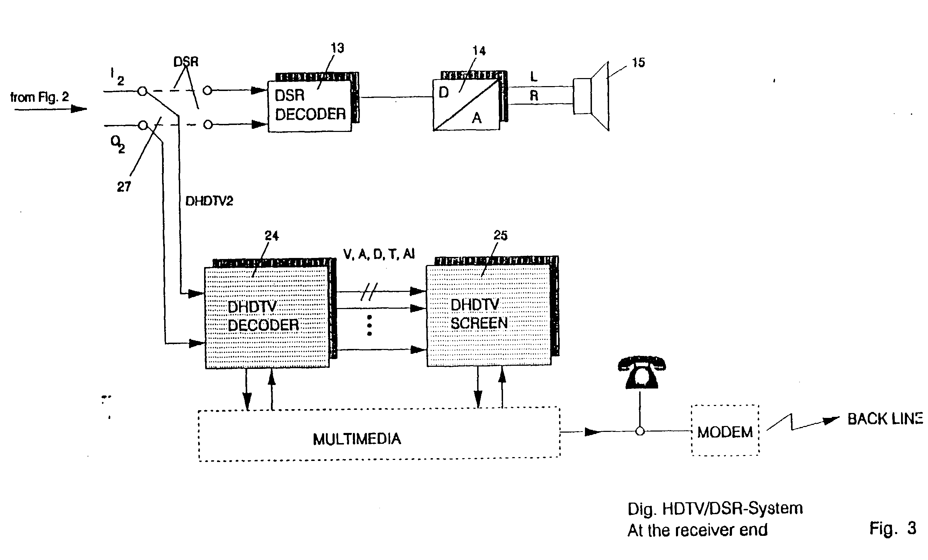

Die Fig. zeigen den Prinzipaufbau einer Übertragungsstrecke für den digitalen Hörfunk über Satelliten, beispielsweise beschrieben in "Neues von Rohde & Schwarz", Heft 114, Sommer 1986, Seite 14. Nach Fig. 1 wird das zu übertragende Stereo-Tonsignal 1 senderseitig in einem DS1-Coder 2 nach der DS1-Norm in einem DS1-Signal übertragen, 16 derartige DS1-Signale werden einem DSR-Multiplexer 3 zugeführt, dessen Ausgang über eine I₁/Q₁-Schnittstelle mit einem 4PSK-Modulator 4 verbunden ist. Der Multiplexer 3 und der 4PSK-Modulator sind Bestandteil eines DSR-Modulators, beispielsweise eines Gerätes SFP der Firma Rohde & Schwarz (näher beschrieben im Datenblatt SFP der Firma Rohde & Schwarz. Die DSR-Ausgangssignale des 4PSK-Modulators 4 werden über einen Umsetzer 6 der Satellitenantenne 7 zugeführt, die z.B. auf 18 GHz zum Satelliten 8 sendet, der seinerseits z.B. auf 12 GHz abstrahlt. Das Satellitensignal wird nach Fig. 2 auf der Empfangsseite über die Außenstelle 9 (outdoor-unit) der Satellitenempfangsanlage empfangen und nach Frequenzumsetzung 10 einem DSR-Empfänger zugeführt, der eingangsseitig einen 4PSK-Demodulator 12 aufweist, dessen I₂/Q₂-Schnittstellen-Ausgänge nach Fig. 3 mit einem DSR-Decoder 13 verbunden sind, der über zwei D/A-Wandler 14 mit den Lautsprechern 15 des Empfängers verbunden ist. Der DSR-Empfänger besteht beispielsweise aus dem Digitalton-Umsetzer DSRU und dem Digitalton-Empfänger DSRE der Firma Rohde & Schwarz oder es handelt sich hierbei um einen der obenerwähnten handelsüblichen Consumer-DSR-Empfänger, wie sie für den Satelliten-Audio-Empfang angeboten werden.

Dieses technisch ausgereifte bekannte DSR-Übertragungssystem für Tonsignale nach Fig. 1, 2 und 3 wird gemäß der Erfindung für die Übertragung von digitalen HDTV-Signalen benutzt, dazu ist es lediglich erforderlich, das vom Fernsehstudio angelieferte digitale HDTV-Signal 20 über einen Coder 21 nach einem der eingangs erwähnten bekannten oder nach verbesserten künftigen Verfahren zur Datenreduktion unter Ausnutzung der psychooptischen Phänomene des menschlichen Auges auf eine Datenrate inklusiv der Kanalcodierung von höchstens 20,48 Mbit/s zu reduzieren. Diese Datenreduktion erfolgt vorzugsweise bereits im Fernsehstudio, so daß zur Übertragung dieses datenreduzierten Signals eine übliche 34 Mbit/s-Übertragungsleitung 22 zur eigentlichen Satelliten-Erdfunkstelle ausreicht. Dort wird das datenreduzierte HDTV-Signal über einen Splitter 23 in zwei Datenströme von jeweils 10,24 Mbit/s aufgeteilt und anstelle der Tonsignale aus dem Multiplexer 3 unmittelbar der Schnittstelle I₁/Q₁ des 4PSK-Modulators 4 zugeführt und somit nach dem an sich für die Übertragung von Tonsignalen entwickelten DSR-Verfahren zum DSR-Empfänger übertragen. Am I₂/Q₂-Schnittstellenausgang des 4PSK-Demodulators 12 dieses Empfängers können dann diese beiden 10,24 Mbit/s-Datenströme abgegriffen und als HDTV-Signale weiter ausgewertet werden. In dem gezeigten Ausführungsbeispiel nach Fig. 3 werden die Datenströme an den Ausgängen I₂/Q₂ einem digitalen HDTV-Decoder 24 zugeführt, der die beiden Datenströme von jeweils 10,24 Mbit/s entweder in ein entsprechendes analoges Fernsehsignal umsetzt, das zur unmittelbaren Wiedergabe in einem analogen Fernsehempfänger 25 geeignet ist, oder der Decoder 24 setzt die Digitalsignale in ein solches digitales HDTV-Signal um, das unmittelbar über einen digitalen Fernsehempfänger 25 weiter verarbeitet werden kann. In beiden Fällen ist der Fernsehempfänger 25 für ein Format 16:9 und für Hochzeilenfernsehen geeignet, also für höchste Bildqualität, vorbereitet.

Um auf der Empfangsseite einen alternativen DSR-Digitalton/Digitalen HDTV-Fernseh-Betrieb mit einem DSR-Empfänger zu ermöglichen, ist der Umschalter vorgesehen, so daß ein und dieselbe DSR-Empfangseinrichtung wahlweise für die Digitalton-Übertragung oder für die HDTV-Digitalsignal-Übertragung eingesetzt werden kann.

Anstelle einer Satelliten- und/oder Kabel-Übertragungsstrecke zwischen DSR-Multiplexer/Modulator 5 und Empfänger kann auch eine andere bekannte Breitbandübertragungsstrecke benutzt werden, beispielsweise eine Richtfunkstrecke oder ein Glasfaserkabel. Mit der Empfangsstation 28 ist in Fig. 2 angedeutet, wie die DSR-Signale über ein Breitbandkabelnetz 29 zu den Empfängern verteilt werden können.

Schließlich ist mit der Satellitenantenne 30 noch eine weitere Anwendungsmöglichkeit für das erfindungsgemäße Verfahren dargestellt, die vom Satelliten 8 empfangenen Signale werden nach Frequenzumsetzung 31 einem 4PSK-Demodulator 32 zugeführt, der dem Demodulator 12 des Empfängers entspricht. Die I₂/Q₂-Ausgänge der Demodulator-Schnittstelle stehen unmittelbar in Verbindung mit dem Eingang eines Kanalcoders 33, der im Prinzip analog aufgebaut sein kann wie ein COFDM-Modulator des bekannten DAB-Systems. Durch diesen Coder 33 werden die datenreduzierten HDTV-Signale in ein digitales Fernsehsignal umgewandelt, das unmittelbar zur Ansteuerung eines terrestrischen Fernsehsenders 34 geeignet ist, der Teil eines landesweiten terrestrischen Fernsehsender-Netzes ist. Auf diese Weise kann das erfindungsgmäße Verfahren auch zur Übertragung von HDTV-Digital-Signalen zu den einzelnen Sendern eines solchen Sendernetzes benutzt werden.

## Patentansprüche

1. Verfahren zum Übertragen von digitalen HDTV-Signalen, dadurch **gekennzeichnet,** daß das mit einer Datenrate von ≦ 20,48 Mbit/s zugeführte oder durch ein die psychooptischen Phänomene des menschlichen Auges ausnützendes Verfahren auf eine solche Datenrate von ≦ 20,48 Mbit/s datenreduzierte HDTV-Signal auf der Senderseite einer nach dem DSR-Verfahren arbeitenden Breitband-Übertragungsstrecke in zwei Datenströme von jeweils 10,24 Mbit/s aufgeteilt wird und der I/Q-Schnittstelle des 4PSK-Modulators dieser DSR-Übertragungsstrecke zugeführt wird und diese zum I/Q-Ausgang des 4PSK-Demodulators dieser DSR-Übertragungsstrecke übertragenen beiden Datenströme dort weiter ausgewertet werden.

2. Verfahren nach Anspruch 1, dadurch **gekennzeichnet**, daß die beiden Datenströme von jeweils 10,24 Mbit/s am I/Q-Ausgang des 4PSK-Demodulators einem HDTV-Decoder zugeführt werden, in welchem sie zu einem digitalen oder analogen Fernsehsignal umgewandelt werden, das für die Auswertung in einem digitalen oder analogen Fernsehempfänger geeignet ist.

3. Verfahren nach Anspruch 1, dadurch **gekennzeichnet**, daß die beiden Datenströme am I/Q-Ausgang des 4PSK-Demodulators nach entsprechender Umcodierung unmittelbar dem Modulationseingang eines Fernsehsenders eines terrestrischen Fernsehsendernetzes zugeführt werden.

4. Verfahren nach einem der vorhergehenden Ansprüche, dadurch **gekennzeichnet**, daß die DSR-Signale über eine Satelliten- und/oder Koaxialkabel-Übertragungsstrecke übertragen werden.

## Claims

1. Process for transmitting digital HDTV signals, characterised in that the HDTV signal, sent at a data rate of ≤ 20.48 Mbit/s or data-reduced to such a data rate of ≤ 20.48 Mbit/s by a process which exploits the psycho-optical phenomena of the human eye, is divided into two data streams each of 10.24 Mbit/s on the transmitting end of a broadband transmitting section operating by the DSR process and is sent to the I/Q interface of the 4PSK modulator of the said DSR transmitting section and there the said two data streams transmitted to the I/Q output of the 4PSK demodulator of the said DSR transmitting section are interpreted further.

2. Process according to claim 1, characterised in that at the I/Q output of the 4PSK demodulator the two data streams each of 10.24 Mbit/s are sent to an HDTV decoder in which they are converted into a digital or analogue television signal that is suited to interpretation in a digital or analogue television receiver.

3. Process according to claim 1, characterised in that after appropriate code conversion the two data streams at the I/Q output of the 4PSK demodulator are sent direct to the modulation input of a television transmitter of a terrestrial television broadcasting network.

4. Process according to any of the preceding claims, characterised in that the DSR signals are transmitted via a satellite and/or coaxial cable transmitting section.

## Revendications

1. Procédé de transmission de signaux numériques HDTV, caractérisé en ce que le signal HDTV fournit un débit de données ≤ 20,48 Mbit/s ou réduit le signal HDTV, à un débit de données ≤ 20,48 Mbit/s, par un procédé utilisant des phénomènes psycoptiques de l'oeil humain, est subdivisé du côté de l'émetteur, à un chemin de transmission en bandes larges travaillant selon le procédé DSR, en deux flux de données de chaque fois 10,24 Mbit/s, et est appliqué à l'interface I/Q du modulateur 4PSK de ce chemin de transmission DSR, et ces deux flux de données transmis à la sortie I/Q du démodulateur 4PSK de ce chemin de transmission DSR sont exploités de nouveau.

2. Procédé selon la revendication 1, caractérisé en ce que les deux flux de données de chaque fois 10,24 Mbit/s sont appliqués à la sortie I/Q du démodulateur 4PSK d'un décodeur HDTV qui les convertit en un signal vidéo numérique ou analogique utilisable dans un récepteur de télévision numérique ou analogique.

3. Procédé selon la revendication 1, caractérisé en ce que les deux flux de données, à la sortie I/Q du démodulateur 4PSK, après un transcodage correspondant, sont appliqués directement à l'entrée de modulation d'un émetteur vidéo d'un réseau de télévision terrestre.

4. Procédé selon l'une des revendications précédentes, caractérisé en ce que les signaux DSR sont transmis par un chemin de transmission par satellite et/ou par câble coaxial.
